# FASCICULE DE BREVET EUROPEEN

(11) **EP 3 322 927 B1**
(45) Date de publication et mention de la délivrance du brevet: **13.03.2019**
(21) Numéro de dépôt: 16741979.5
(22) Date de dépôt: 24.06.2016
(51) Int. Cl.: F16K 25/00, F16K 1/42

(54) **VANNE À SÉCURITÉ ANTI-FEU AMÉLIORÉE**
VERBESSERTES BRANDSICHERES VENTIL
IMPROVED ANTI-FIRE SECURITY VALVE

(30) Priorité: 13.07.2015 FR 1556642
(43) Date de publication de la demande: 23.05.2018
(73) Titulaire: DE DIETRICH, 67110 Niederbronn-les-Bains (FR)
(72) Inventeur: PFEIFFER, Jean-Philippe, Laubach 67580 (FR)
(74) Mandataire: Merckling, Norbert
(86) Numéro de dépôt international: PCT/FR2016/051562
(87) Numéro de publication internationale: WO 2017/009536

(56) Documents cités:
- GB-A- 2 042 138
- US-A- 3 425 440
- US-A1- 2002 011 581
- US-A1- 2013 140 479

## Description

### Domaine technique

La présente invention se rapporte à une vanne de fond de cuve pour réacteur, mélangeur ou équipement de stockage présentant une sécurité anti-feu améliorée visant à renforcer son étanchéité en cas d'incendie.

L'invention concerne plus particulièrement une vanne de fond de cuve dans laquelle le siège sur lequel repose l'obturateur est recouverte d'une couche de fluoropolymère.

### Etat de la technique

Dans le domaine des vannes de fond de cuve pour réacteur, mélangeur ou équipement de stockage, le siège sur lequel vient reposer un obturateur est habituellement recouvert d'une couche de fluoropolymère qui présente notamment les avantages à la fois de résister aux produits en contacts, d'être neutre sur le plan de la réactivité chimique, d'être facilement nettoyable et de présenter une excellente étanchéité.

Lors de très fortes chaleurs, notamment en cas d'incendie, il arrive que cette couche de fluoropolymère se détériore, par exemple en brûlant ou en fondant. L'obturateur de la vanne se retrouve alors directement en contact avec le matériau du siège situé sous la couche de fluoropolymère, le plus souvent de l'acier inoxydable. Ce contact n'est pas satisfaisant du point de vue de l'étanchéité et les liquides dangereux susceptibles d'être contenus dans le réacteur peuvent alors s'écouler à travers la vanne, ce qui représente de graves dangers, notamment pour l'environnement en général et plus spécifiquement pour les agents de sécurité intervenant pour éteindre l'incendie. D'autant plus qu'une éventuelle certification Fire-Safe de la vanne interdirait ce phénomène.

Le matériau de l'obturateur se retrouve alors directement en contact avec le matériau du siège situé sous la couche de fluoropolymère. Là encore, ce contact n'est pas satisfaisant du point de vue de l'étanchéité et des liquides dangereux peuvent s'écouler à travers la vanne.

Par les documents US 2013/140479 A1, US 2002/011581 A1, US 3425440 A et GB 2042138 A, on connaît des vannes dans lesquelles l'ouverture refermée par un obturateur comporte un revêtement en fluoropolymère ou dans un autre polymère assurant l'étanchéité entre l'ouverture et l'obturateur. Aucun de ces documents ne divulgue cependant d'anneau d'étanchéité additionnel fait d'un matériau résistant non métallique qui est intégralement recouvert par le revêtement en fluoropolymère.

### Description de l'invention

L'objet de la présente invention vise par conséquent à pallier les inconvénients de l'art antérieur en proposant une nouvelle vanne présentant une sécurité anti-feu améliorée visant à renforcer son étanchéité en cas d'incendie.

Les objets assignés à l'invention sont atteints à l'aide d'une vanne comprenant un corps muni d'un passage traversant et comprenant un obturateur déplaçable entre une première position dans laquelle il permet l'écoulement d'un produit à travers le passage et une seconde position dans laquelle il interrompt l'écoulement du produit, dans laquelle l'ouverture du passage traversant comporte un revêtement en fluoropolymère qui, dans des conditions normales de fonctionnement, fournit un siège entre le corps et l'obturateur lorsque ce dernier se trouve dans sa seconde position, caractérisée en ce qu'elle comporte au niveau de l'ouverture du passage traversant un anneau d'étanchéité fait d'un matériau non métallique résistant aux fortes températures qui, dans des conditions normales de fonctionnement, est intégralement recouvert par le revêtement en fluoropolymère, et qui, en cas de défaillance du revêtement en fluoropolymère, fournit un siège entre le corps et l'obturateur et vient en contact avec l'obturateur lorsque l'obturateur est dans sa seconde position de façon à interrompre l'écoulement du produit à travers le passage traversant.

Grâce à l'anneau d'étanchéité fait d'un matériau résistant au fluage et offrant une étanchéité satisfaisante lorsqu'il est en contact avec de l'acier inoxydable, de l'alloy ou de l'émail, l'anneau d'étanchéité interrompt l'écoulement du produit à travers la vanne lorsqu'il est dans sa seconde position. Ainsi, en position de fermeture, la vanne selon l'invention reste étanche lors d'un incendie ou de conditions de chaleur extrêmes.

Selon un exemple de mise en oeuvre de l'invention, l'anneau d'étanchéité résiste à des températures supérieures à 750°C.

Selon un autre exemple de mise en oeuvre de l'invention, l'anneau d'étanchéité est en graphite. Le graphite, en plus de résister à des températures extrêmement élevées, présente un effet une excellente résistance au fluage qui contribue à l'étanchéité de la vanne.

Selon un exemple supplémentaire de mise en oeuvre de l'invention, l'anneau d'étanchéité présente une épaisseur comprise entre 1 et 10 millimètres, préférentiellement comprise entre 2 et 8 millimètres et plus préférentiellement comprise entre 3 et 5 millimètres. Il résiste sans se rompre ainsi à la pression exercée par l'obturateur.

Selon un exemple de mise en oeuvre de l'invention, l'anneau d'étanchéité présente un diamètre interne inférieur à celui l'ouverture du passage traversant lorsque celui-ci est considéré sans revêtement en fluoropolymère. L'anneau d'étanchéité est ainsi prévu pour assurer l'étanchéité de la vanne avec l'obturateur uniquement lorsque le revêtement en fluoropolymère en défaillant.

Selon un autre exemple de mise en oeuvre de l'invention, le revêtement en fluoropolymère est du perfluoroalkoxy ou du polytétrafluoroéthylène.

Selon un exemple supplémentaire de mise en oeuvre de l'invention, l'obturateur comporte une couche externe d'émail.

Selon une variante de mise en oeuvre de l'invention, l'anneau d'étanchéité est logé dans une rainure prévue dans le pourtour de l'ouverture du passage traversant de la vanne.

Selon cette variante, la rainure peut être prévue de sorte que l'épaisseur du revêtement en fluoropolymère situé au-dessus de l'anneau d'étanchéité est supérieure à celle du revêtement en fluoropolymère situé ailleurs sur le corps de la vanne, préférentiellement deux fois supérieure.

Selon une variante de mise en oeuvre de l'invention, l'obturateur est mobile axialement par rapport au passage traversant de façon à pouvoir se déplacer en éloignement et en rapprochement de l'ouverture du passage traversant.

### Brève description des dessins

D'autres caractéristiques et avantages de la présente invention apparaîtront plus clairement à la lecture de la description qui va suivre, faite en référence aux dessins annexés, donnés à titre d'exemples non limitatifs, dans lesquels :
- la figure 1 est une vue partielle d'un réacteur, mélangeur ou équipement de stockage équipé d'une vanne de fond de cuve selon l'invention, avec un écorché en coupe au niveau de la vanne ;

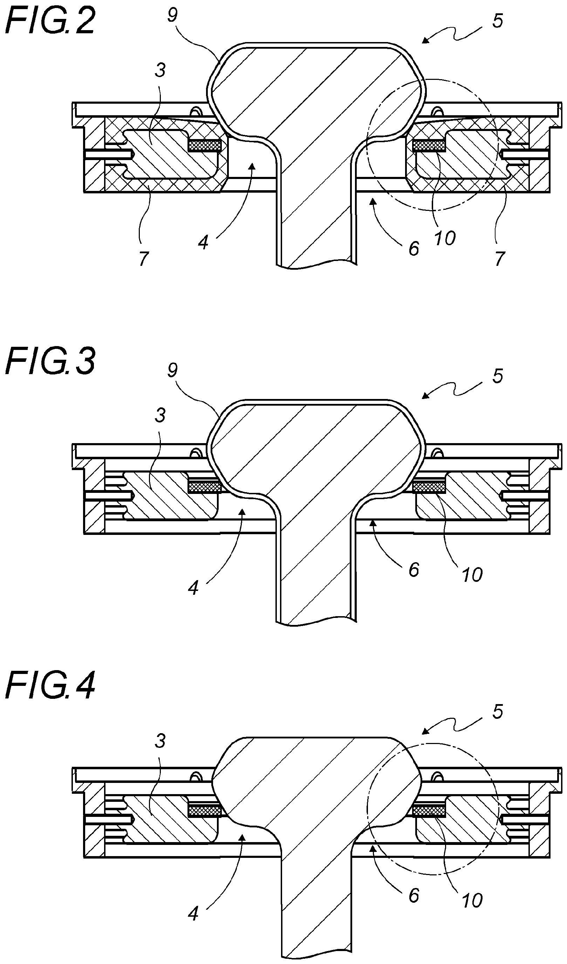

- la figure 2 est une vue partielle en coupe d'une vanne selon l'invention équipée d'un obturateur à déplacement vertical en position de fermeture, laquelle vanne est représentée dans des conditions normales ;
- la figure 3 est une vue partielle en coupe d'une vanne selon l'invention équipée d'un obturateur à déplacement vertical en position de fermeture, laquelle vanne est représentée dans des conditions où le revêtement en fluoropolymère du siège est défaillant ;
- la figure 4 est une vue partielle en coupe d'une vanne selon l'invention équipée d'un obturateur à déplacement vertical en position de fermeture, laquelle vanne est représentée dans des conditions où le revêtement en fluoropolymère du siège et le revêtement en émail de l'obturateur, si présent, sont défaillants ;

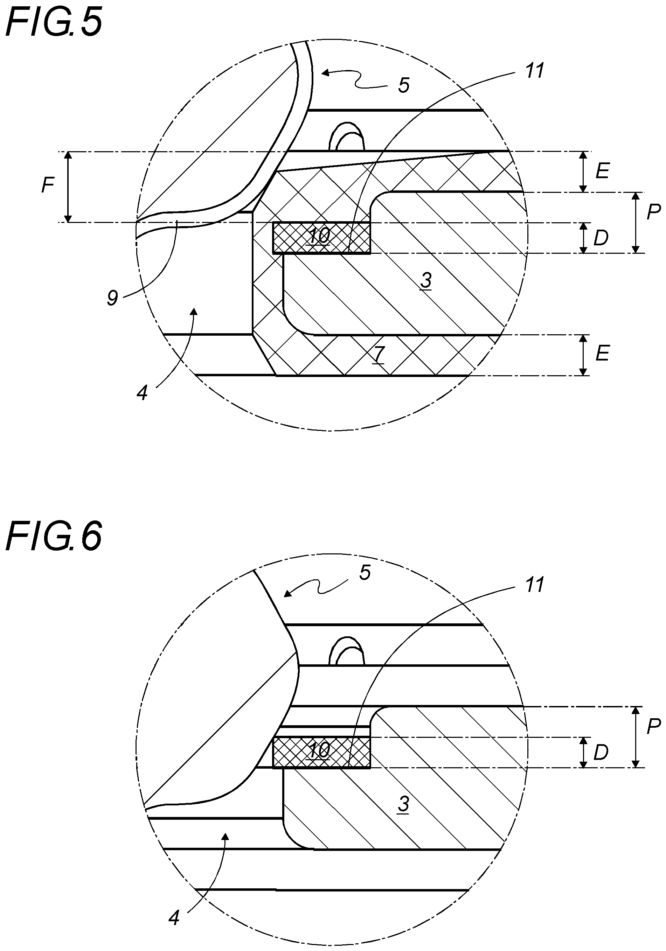

- la figure 5 est une vue de détail de la partie encerclée sur la figure 2 ; et
- la figure 6 est une vue de détail de la partie encerclée sur la figure 4.

### Mode(s) de réalisation de l'invention

Les éléments structurellement et fonctionnellement identiques présents sur plusieurs figures distinctes, sont affectés d'une même référence numérique ou alphanumérique.

L'invention se rapporte à une vanne (1), ou à tout autre appareil de robinetterie.

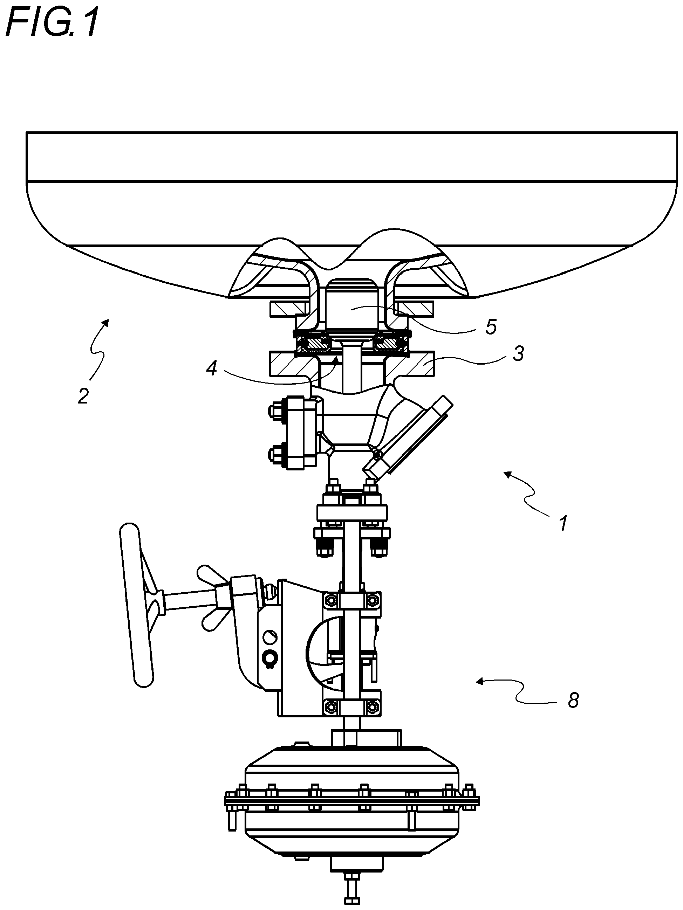

La vanne (1) selon l'invention est préférentiellement prévue pour équiper le fond de cuve d'un réacteur (2), mélangeur ou équipement de stockage comme cela est représenté sur la figure 1, mais elle peut être adaptée à n'importe quel type de contenant pour lequel on souhaite une sécurité anti-feu améliorée visant à renforcer son étanchéité en cas d'incendie.

Une vanne (1) comprend habituellement un corps (3) muni d'un passage traversant (4) et un obturateur (5) déplaçable entre une première position dans laquelle il permet l'écoulement d'un produit à travers le passage traversant (4) et une seconde position dans laquelle il interrompt l'écoulement du produit.

Le corps (3) de la vanne (1), est habituellement en acier carbone, inoxydable ou alloy et éventuellement recouvert d'un revêtement en émail ou en fluoropolymère dans sa partie interne.

L'ouverture (6) du passage traversant (4) comporte un revêtement (7) en fluoropolymère qui, dans des conditions normales de fonctionnement, fournit un siège entre le corps (3) et l'obturateur (5) lorsque ce dernier se trouve dans sa seconde position. Ce revêtement (7) en fluoropolymère est habituellement en perfluoroalkoxy ou en polytétrafluoroéthylène. Le perfluoroalkoxy est cependant préféré au polytétrafluoroéthylène car il est possible de le faire fondre et de l'utiliser avec des techniques d'injection et de moulage conventionnelles.

L'obturateur (5) est par exemple actionné en déplacement par un dispositif d'ouverture/fermeture (8) permettant de le faire passer d'une position à une autre.

L'obturateur (5) peut être recouvert d'une couche d'émail (9), bien que cela ne soit pas systématique.

Au niveau de l'ouverture (6) du passage traversant (4), la vanne (1) de l'invention comporte un anneau d'étanchéité (10) fabriqué dans un matériau non métallique résistant aux fortes températures.

Dans des conditions normales de fonctionnement, cet anneau d'étanchéité (10) est intégralement recouvert par le revêtement (7) en fluoropolymère.

Puisqu'il est intégralement recouvert par un revêtement (7) en fluoropolymère, dans des conditions normales de fonctionnement, l'anneau d'étanchéité (10) se trouve à distance de l'obturateur (5) lorsque celui-ci est dans sa seconde position, cette distance correspondant à l'épaisseur du revêtement (7) en fluoropolymère.

Etant intégralement recouvert par un revêtement (7) en fluoropolymère, l'anneau d'étanchéité (10) n'interagit donc pas avec le produit contenu dans le réacteur (2) et susceptible de s'écouler à travers la vanne (1). Lorsqu'il est en graphite, matériau connu pour son pouvoir réducteur, l'anneau d'étanchéité (10) n'interagit donc pas chimiquement avec le produit contenu dans le réacteur (2) et n'est pas susceptible de réagir violemment avec des oxydants puissants.

S'il n'était pas intégralement recouvert par un revêtement (7) en fluoropolymère, l'anneau d'étanchéité (10) serait susceptible de réagir chimiquement avec le produit contenu dans le réacteur (2) et donc de le dénaturer. Dans le cas où le réacteur (2) contiendrait un oxydant puissant, l'anneau d'étanchéité (10) réagirait violemment avec celui-ci, ce qui altérerait la réaction chimique ayant lieu dans le réacteur et risquerait également de détériorer la vanne (1).

En outre, l'anneau d'étanchéité (10) présente un diamètre interne inférieur à celui l'ouverture (6) du passage traversant (4) lorsque celui-ci est considéré sans revêtement (7) en fluoropolymère.

Ainsi, dans des conditions normales de fonctionnement, l'anneau d'étanchéité (10) n'interagit pas avec l'obturateur (5) et la vanne (1) fonctionne de manière classique, comme si elle ne comportait pas anneau d'étanchéité (10).

En cas de défaillance du revêtement (7) en fluoropolymère, par exemple lorsque celui-ci fond en raison d'une chaleur importante ou qu'il brûle en cas d'incendie, l'anneau d'étanchéité (10) est mis à nu et peut interagir avec l'obturateur (5).

Ainsi, lorsque l'obturateur (5) est dans sa seconde position, l'anneau d'étanchéité (10) fournit un siège entre le corps (3) et l'obturateur (5) et vient en contact avec l'obturateur (5) de façon à interrompre l'écoulement du produit à travers le passage traversant (4).

L'appui de l'obturateur (5) sur l'anneau d'étanchéité (10) assure ainsi l'étanchéité de la vanne (1) en cas de défaillance du revêtement (7) en fluoropolymère. Dans le cas où l'obturateur (5) vient appuyer sur le dessus de l'anneau d'étanchéité (10), cette étanchéité est encore renforcée par la pression exercée sur l'obturateur (5) par le produit contenu dans le réacteur (2).

La matière de l'anneau d'étanchéité (10) est choisie de sorte que le contact entre l'obturateur (5) et l'anneau d'étanchéité (10) soit satisfaisant, même lorsque la couche d'émail (9) recouvrant l'obturateur (5) est défaillante.

Afin de résister au fluage et de présenter une étanchéité satisfaisante lorsqu'il est en contact avec de l'acier inoxydable ou de l'émail, l'anneau d'étanchéité (10) est prévu pour résister à des températures supérieures à 750 °C et est préférentiellement en graphite.

L'anneau d'étanchéité (10) est prévu pour résister à la pression exercée par l'obturateur (5) et ne pas se rompre. Ainsi, il présente préférentiellement une épaisseur D comprise entre 1 et 10 millimètres, préférentiellement comprise entre 2 et 8 millimètres et plus préférentiellement comprise entre 3 et 5 millimètres.

L'anneau d'étanchéité (10) est préférentiellement logé dans une rainure (11) prévue dans le pourtour de l'ouverture (6) du passage traversant (4) de la vanne (1). Selon un mode de réalisation préféré de l'invention, la profondeur P de ladite rainure (11) est prévue de sorte que l'épaisseur F du revêtement (7) en fluoropolymère situé au-dessus de l'anneau d'étanchéité (10) est supérieure à l'épaisseur E du revêtement (7) en fluoropolymère situé ailleurs sur le corps (3) de la vanne (1).

Il est évident que la présente description ne se limite pas aux exemples explicitement décrits, mais comprend également d'autres modes de réalisation et/ou de mise en oeuvre. Ainsi, une caractéristique technique décrite peut être remplacée par une caractéristique technique équivalente sans sortir du cadre de la présente invention et une étape décrite de mise en oeuvre du procédé peut être remplacée par une étape équivalente sans sortir du cadre de l'invention tel que défini par les revendications.

Ainsi, bien que l'invention ait été décrite dans le cadre des vannes de fond de cuve pour un réacteur, un mélangeur ou un équipement de stockage dans lesquelles le siège sur lequel vient reposer un obturateur émaillé est recouvert d'une couche de fluoropolymère, il est évident que l'invention peut s'appliquer à tout autre dispositif pour lequel ont recherche une sécurité renforcée permettant de garantir une certaine étanchéité en cas d'incendie ou de grande chaleur ayant pour effet de détruire ou de réduire une couche remplissant ce rôle d'étanchéité dans des conditions normales.

## Revendications

1. Vanne (1) comprenant un corps (3) muni d'un passage traversant (4), et comprenant un obturateur (5) déplaçable entre une première position dans laquelle il permet l'écoulement d'un produit à travers le passage et une seconde position dans laquelle il interrompt l'écoulement du produit, dans laquelle l'ouverture (6) du passage traversant (4) comporte un revêtement (7) en fluoropolymère qui, dans des conditions normales de fonctionnement, fournit un siège entre le corps (3) et l'obturateur (5) lorsque ce dernier se trouve dans sa seconde position, **caractérisée en ce qu'**elle comporte au niveau de l'ouverture (6) du passage traversant (4) un anneau d'étanchéité (10) fait d'un matériau non métallique résistant aux fortes températures qui, dans des conditions normales de fonctionnement, est intégralement recouvert par le revêtement (7) en fluoropolymère, et qui, en cas de défaillance du revêtement (7) en fluoropolymère, fournit un siège entre le corps (3) et l'obturateur (5) et vient en contact avec l'obturateur (5) lorsque l'obturateur (5) est dans sa seconde position de façon à interrompre l'écoulement du produit à travers le passage traversant (4).

2. Vanne (1) selon la revendication 1, **caractérisée en ce que** l'anneau d'étanchéité (10) résiste à des températures supérieures à 750 °C.

3. Vanne (1) selon la revendication 1 ou 2, **caractérisée en ce que** l'anneau d'étanchéité (10) est en graphite.

4. Vanne (1) selon l'une quelconque des revendications précédentes, **caractérisée en ce que** l'anneau d'étanchéité (10) présente une épaisseur D comprise entre 1 et 10 millimètres, préférentiellement comprise entre 2 et 8 millimètres et plus préférentiellement comprise entre 3 et 5 millimètres.

5. Vanne (1) selon l'une quelconque des revendications précédentes, **caractérisée en ce que** l'anneau d'étanchéité (10) présente un diamètre interne inférieur à celui l'ouverture (6) du passage traversant (4) lorsque celui-ci est considéré sans revêtement (7) en fluoropolymère.

6. Vanne (1) selon l'une quelconque des revendications précédentes, **caractérisée en ce que** le revêtement (7) en fluoropolymère est du perfluoroalkoxy ou du polytétrafluoroéthylène.

7. Vanne (1) selon l'une quelconque des revendications précédentes, **caractérisée en ce que** l'obturateur (5) comporte une couche externe d'émail (9).

8. Vanne (1) selon l'une quelconque des revendications précédentes, **caractérisée en ce que** l'anneau d'étanchéité (10) est logé dans une rainure (11) prévue dans le pourtour de l'ouverture (6) du passage traversant (4) de la vanne (1).

9. Vanne (1) selon la revendication précédente, **caractérisée en ce que** la profondeur P de la rainure (11) est prévue de sorte que l'épaisseur F du revêtement (7) en fluoropolymère situé au-dessus de l'anneau d'étanchéité (10) est supérieure à l'épaisseur E du revêtement (7) en fluoropolymère situé ailleurs sur le corps (3) de la vanne (1).

10. Vanne (1) selon l'une quelconque des revendications précédentes, **caractérisée en ce que** l'obturateur (5) est mobile axialement par rapport au passage traversant (4) de façon à pouvoir se déplacer en éloignement et en rapprochement de l'ouverture (6) du passage traversant (4).

## Patentansprüche

1. Ventil (1), umfassend einen Körper (3), versehen mit einer durchführenden Passage (4) und einen Verschluss (5), der zwischen einer ersten Position, in der der Durchfluss eines Produktes durch die Passage möglich ist, und einer zweiten Position, bei der der Durchfluss des Produktes unterbrochen wird, verschiebbar ist, in dem die Öffnung (6) der durchführenden Passage (4) eine Beschichtung (7) aus Fluorpolymer aufweist, die unter normalen Betriebsbedingungen einen Sitz zwischen dem Körper (3) und dem Verschluss (5) bereitstellt, wenn sich der letztere in der geschlossenen Position befindet, **dadurch gekennzeichnet, dass** an der Öffnung (6) der durchführenden Passage (4) ein Dichtring (10) aus einem nichtmetallischen, hochtemperaturbeständigen Material vorgesehen ist, der unter normalen Betriebsbedingungen der Dichtring vollständig mit der Fluorpolymerbeschichtung (7) bedeckt und der, für den Fall, dass die Fluorpolymerbeschichtung (7) versagen sollte, einen Sitz zwischen dem Körper (3) und dem Verschluss (5) bereitstellt und mit dem Verschluss (5) in Kontakt kommt, wenn sich der Verschluss (5) sich in seiner geschlossenen Position befindet, in der der Produktdurchfluss durch die durchführende Passage (4) unterbrochen ist.

2. Ventil (1) gemäß Anspruch 1, **dadurch gekennzeichnet, dass** der Dichtring (10) für Temperaturen über 750 °C ausgelegt ist.

3. Ventil (1) gemäß Anspruch 1 oder 2, **dadurch gekennzeichnet, dass** der Dichtring (10) aus Graphit besteht.

4. Ventil (1) gemäß einem der vorangehenden Ansprüche, **dadurch gekennzeichnet, dass** der Dichtring (10) eine Dicke D zwischen 1 und 10 Millimetern aufweist, besser noch zwischen 2 und 8 Millimetern und am besten zwischen 3 und 5 Millimetern.

5. Ventil (1) gemäß einem der vorangehenden Ansprüche, **dadurch gekennzeichnet, dass** der Dichtring (10) einen Innendurchmesser aufweist, der kleiner ist als der der Öffnung (6) der durchführenden Passage (4), wird diese ohne Fluorpolymerbeschichtung (7) betrachtet.

6. Ventil (1) gemäß einem der vorangehenden Ansprüche, **dadurch gekennzeichnet, dass** die Fluorpolymerbeschichtung (7) aus Perfluoroalkoxy oder Polytetrafluorethylen besteht.

7. Ventil (1) gemäß einem der vorangehenden Ansprüche, **dadurch gekennzeichnet, dass** der Verschluss (5) eine Außenbeschichtung aus Email umfasst.

8. Ventil (1) gemäß einem der vorangehenden Ansprüche, **dadurch gekennzeichnet, dass** der Dichtring (10) in einer Nut (11) untergebracht ist, die im Umfang der Öffnung (6) der durchführenden Passage (4) des Ventils (1) vorgesehen ist.

9. Ventil (1) gemäß dem vorangehenden Anspruch, **dadurch gekennzeichnet, dass** die Tiefe P der Nut (11) so vorgesehen ist, dass die Dicke F der Fluorpolymerbeschichtung (7), die sich über dem Dichtring (10) befindet, größer ist, als die Dicke E der Fluorpolymerbeschichtung (7) auf dem übrigen Körper (3) des Ventils (1).

10. Ventil (1) gemäß einem der vorangehenden Ansprüche, **dadurch gekennzeichnet, dass** der Verschluss (5) axial, bezogen auf die durchführende Passage (4), beweglich ist, so dass er von der Öffnung (6) der durchführenden Passage (4) entfernt oder ihr angenähert werden kann.

## Claims

1. Valve (1) comprising a body (3) having a through-passage (4) and comprising a shutter (5) movable between a first position in which it allows the flow of a product through the passage and a second position in which it interrupts the flow of the product, wherein the opening (6) of the through-passage (4) includes a coating (7) of fluoropolymer which, under normal operating conditions, provides a seat between the body (3) and the shutter (5) when the latter is in the second position thereof, **characterized in that** it comprises at the level of the opening (6) of the through-passage (4) a sealing ring (10) made of a non-metallic material resistant to high temperatures which, under normal operating conditions, is entirely covered by the fluoropolymer coating (7), and which, in case of failure of the fluoropolymer coating (7), provides a seat between the body (3) and the shutter (5) and comes into contact with the shutter (5) when the shutter (5) is in the second position thereof such as to interrupt the flow of the product through the through-passage (4).

2. Valve (1) according to claim 1, **characterized in that** the sealing ring (10) resists temperatures of more than 750°C.

3. Valve (1) according to claims 1 or 2, **characterized in that** the sealing ring (10) is of graphite.

4. Valve (1) according to any one of the preceding claims, **characterized in that** the sealing ring (10) has a thickness D comprised between 1 and 10 millimeters, preferably between 2 and 8 millimeters and more preferably between 3 and 5 millimeters.

5. Valve (1) according to any one of the preceding claims, **characterized in that** the sealing ring (10) has an inside diameter smaller than that of the opening (6) of the through-passage (4) when considered without the fluoropolymer coating (7).

6. Valve (1) according to any one of the preceding claims, **characterized in that** the fluoropolymer coating (7) is of perfluoroalkoxy or polytetrafluoroethylene.

7. Valve (1) according to any one of the preceding claims, **characterized in that** the shutter (5) comprises an external layer of enamel (9).

8. Valve (1) according to any one of the preceding claims, **characterized in that** the sealing ring (10) is housed in a groove (11) provided in the periphery of the opening (6) of the through-passage (4) of the valve (1).

9. Valve (1) according to the preceding claim, **characterized in that** the depth P of the groove (11) is such that the thickness F of the fluoropolymer coating (7) situated above the sealing ring (10) is greater than the thickness E of the fluoropolymer coating (7) situated elsewhere on the body (3) of the valve (1).

10. Valve (1) according to any one of the preceding claims, **characterized in that** the shutter (5) is axially movable relative to the through-passage (4) such as to be capable of moving towards and away from the opening (6) of the through-passage (4).
